# EUROPEAN PATENT SPECIFICATION

(11) **EP 4 348 370 B1**
(45) Date of publication and mention of the grant of the patent: **07.01.2026**
(21) Application number: 21944361.1
(22) Date of filing: 01.06.2021
(51) Int. Cl.: G05D 1/229, G05D 1/246, G05D 1/644, G05D 1/693, G05D 105/28, G05D 107/70, G05D 109/10, G01C 21/20

(54) **WAYPOINT REDUCTION FOR PATH PLANNING OF MULTIPLE AUTONOMOUS ROBOTS**
WEGPUNKTREDUKTION ZUR WEGPLANUNG MEHRERER AUTONOMER ROBOTER
RÉDUCTION DE POINTS DE PASSAGE POUR LA PLANIFICATION DE TRAJECTOIRES DE PLUSIEURS ROBOTS AUTONOMES

(43) Date of publication of application: 10.04.2024
(73) Proprietor: Nokia Technologies Oy, 02610 Espoo (FI)
(72) Inventor: SEGALL, Itai, Hoboken, NJ 07030 (US); CHANG, Fangzhe, Edison, NJ 08820 (US)
(74) Representative: Louis Pöhlau Lohrentz
(86) International application number: PCT/US2021/035155
(87) International publication number: WO 2022/255989

(56) References cited:
- US-A1- 2008 009 967
- US-A1- 2010 023 185
- US-A1- 2020 033 867
- US-A1- 2020 033 867
- US-B2- 10 777 085

## Description

### TECHNOLOGICAL FIELD

An example embodiment relates generally to autonomous robot path planning, and, more particularly, to techniques for improving performance of autonomous robots through waypoint reduction for path planning.

### BACKGROUND

In various settings, such as an enterprise setting, robotic orchestration involves a high-level programming environment of robotic tasks, and a runtime that interprets these tasks and translates them into timely assignment of actions to agents (e.g., robots) in a way that satisfies objectives of a robotic system. For robots in an open environment, such as surveillance robots or delivery robots in an industrial and/or enterprise setting, a key robotic capability is autonomous navigation.

In some examples, an autonomous robot is capable of traversing between locations on a map, while safely avoiding both static obstacles (e.g., walls, desks, and/or the like) and dynamic obstacles (e.g., people) along the way. However, conflicts such as deadlocks, livelocks, collisions, and/or the like may occur when two or more autonomous robots operate within close proximity (e.g., when navigating a narrow passage or the like). In order to resolve such conflicts, external intervention and/or assumption of direct control of the robots may be required. Therefore, it is beneficial that a robotic orchestration system include components that help autonomous robots safely navigate spaces while avoiding inter-robot conflicts.

US 2020/033867 A1 describes a dynamic spatiotemporal robotic navigation which allows robots to work around a failure such that there is no impact on the execution of the spatiotemporal plans being executed by the robots. For instance, the dynamic spatiotemporal robotic navigation may allow a robot to work around a failure by temporarily bypassing unavailable or conflicted resources specified in a spatiotemporal plan via accessing a non-conflicting, adjacent, and available set of resources that may not be specified in the spatiotemporal plan, but that are dynamically identified as a viable workaround.

US 10 777 085 B2 describes a flight plan based on one or more required time-of-arrival constraints associated with a plurality of waypoints that define a path an aerial vehicle is to traverse, wherein the altitude and the speed are varied to order to reduce the cost to operate the aerial vehicle.

### BRIEF SUMMARY

An apparatus, a computer program product and a method are described as defined in the claims.

### BRIEF DESCRIPTION OF THE DRAWINGS

Having thus described certain example embodiments of the present disclosure in general terms above, non-limiting and non-exhaustive embodiments of the subject disclosure will now be described with reference to the accompanying drawings which are not necessarily drawn to scale. The components illustrated in the accompanying drawings may or may not be present in certain embodiments described herein. Some embodiments may include fewer (or more) components than those shown in the drawings.
FIG. 1 is a block diagram of a system configured to communicate via a network in accordance with an example embodiment;
FIG. 2 is a block diagram of an apparatus that may be specifically configured in accordance with an example embodiment of the present disclosure;
FIG. 3A is an example representation of an example waypoint removal process in accordance with an example embodiment;
FIG. 3B is an example representation of example waypoint minimization in accordance with an example embodiment;
FIG. 3C is an example representation of example waypoint minimization in accordance with an example embodiment;
FIG. 3D is an example representation of example waypoint minimization in accordance with an example embodiment;
FIG. 3E is an example representation of example waypoint minimization in accordance with an example embodiment;
FIG. 3F is an example representation of an example waypoint removal process in accordance with an example embodiment;
FIG. 4 is a flowchart illustrating operations performed in accordance with an example embodiment;
FIG. 5 is a flowchart illustrating operations performed in accordance with an example embodiment;
FIG. 6 is a flowchart illustrating operations performed in accordance with an example embodiment; and
FIG. 7 is an example representation of a coverage area in accordance with an example embodiment.

### DETAILED DESCRIPTION

Some embodiments of the present invention will now be described more fully hereinafter with reference to the accompanying drawings. Like reference numerals refer to like elements throughout. As used herein, the terms "data," "content," "information," "electronic information," "signal," "command," and similar terms may be used interchangeably to refer to data capable of being captured, transmitted, received, and/or stored in accordance with various embodiments of the present disclosure. Thus, use of any such terms should not be taken to limit the spirit and scope of embodiments of the present disclosure. Further, where a first computing device is described herein to receive data from a second computing device, it will be appreciated that the data may be received directly from the second computing device or may be received indirectly via one or more intermediary computing devices, such as, for example, one or more servers, relays, routers, network access points, base stations, hosts, repeaters, and/or the like, sometimes referred to herein as a "network." Similarly, where a first computing device is described herein as sending data to a second computing device, it will be appreciated that the data may be sent or transmitted directly to the second computing device or may be sent or transmitted indirectly via one or more intermediary computing devices, such as, for example, one or more servers, remote servers, cloud-based servers (e.g., cloud utilities), relays, routers, network access points, base stations, hosts, repeaters, and/or the like.

The term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of. Furthermore, to the extent that the terms "includes" and "including," and variants thereof are used in either the detailed description or the claims, these terms are intended to be inclusive in a manner similar to the term "comprising."

The phrases "in one embodiment," "according to one embodiment," "in some embodiments," and the like generally refer to the fact that the particular feature, structure, or characteristic following the phrase may be included in the at least one embodiment of the present disclosure. Thus, the particular feature, structure, or characteristic may be included in more than one embodiment of the present disclosure such that these phrases do not necessarily refer to the same embodiment.

As used herein, the terms "example," "exemplary," and the like are used to mean "serving as an example, instance, or illustration." Any implementation, aspect, or design described herein as "example" or "exemplary" is not necessarily to be construed as preferred or advantageous over other implementations, aspects, or designs. Rather, use of the terms "example," "exemplary," and the like are intended to present concepts in a concrete fashion.

If the specification states a component or feature "may," "can," "could," "should," "would," "preferably," "possibly," "typically," "optionally," "for example," "often," or "might" (or other such language) be included or have a characteristic, that particular component or feature is not required to be included or to have the characteristic. Such component or feature may be optionally included in some embodiments, or it may be excluded.

As used herein, the term "computer-readable medium" refers to non-transitory storage hardware, non-transitory storage device or non-transitory computer system memory that may be accessed by a controller, a microcontroller, a computational system or a module of a computational system to encode thereon computer-executable instructions or software programs. A non-transitory "computer-readable medium" may be accessed by a computational system or a module of a computational system to retrieve and/or execute the computer-executable instructions or software programs encoded on the medium. Exemplary non-transitory computer-readable media may include, but are not limited to, one or more types of hardware memory, non-transitory tangible media (for example, one or more magnetic storage disks, one or more optical disks, one or more USB flash drives), computer system memory or random-access memory (such as, DRAM, SRAM, EDO RAM), and the like.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device (such as a core network apparatus), field programmable gate array, and/or other computing device.

In some examples, multi-robot path planning involves a process of finding conflict-free paths between a starting point (e.g., a robot's current location) and an ending point. Output of a multi-robot path planning algorithm typically includes detailed paths for each robot. In an industrial setting, for example, in which robots are expected to autonomously navigate, it is difficult to provide specific paths to robots. Instead, waypoints may be provided to the autonomous robots (e.g., a series and/or sequence of waypoints for each robot, each of which the robot is expected to autonomously navigate to). As used herein, a "waypoint" comprises an intermediate point or location on a path (e.g., a route or line of travel).

A robotic orchestration system therefore needs to generate sets of waypoints for each robot, such that if each robot autonomously and freely navigates between the waypoints, under certain assumptions of a behavior of each robot, the robots are expected to succeed in their journey. In some examples, assumptions for such behavior includes an assumption that each robot follows a shortest possible path between each pair of consecutive waypoints. This shortest possible path is typically not unique, therefore all such potential paths need to be accounted for in an efficient manner. Said differently, a path planner needs to guarantee that for any path that each robot might choose, conflicts (e.g., collision, livelocks, deadlocks, and/or the like) are guaranteed to be avoided.

However, discretizing paths for autonomous robots into very dense sequences of waypoints which closely guide each robot strictly along centrally planned (e.g., server-planned) paths results in precluding local autonomous decisions by the robots, and delegating all or a majority of navigation decisions to a central path coordinator (e.g., a server, robotic orchestration system, and/or the like). In this regard, a computational burden is placed on the central path coordinator to constantly monitor sensor data from all autonomous robots and make immediate, real-time decisions in response to changing circumstances across the system and/or environment. Therefore, it is beneficial that the central path coordinator provide the robots with as minimal a number of waypoints as possible, allowing for the robots to retain autonomy and make autonomous decisions in accordance with their own internal functionalities and/or capabilities.

Some example implementations of multi-robot path planning involve orchestrating teams of agents (e.g., physical entities such as robots or digital entities such as characters, avatars, etc.) in physical environments or in simulated digital worlds (e.g., video games) and planning complete and detailed paths for each agent, requiring that each agent very tightly and synchronously follow a designated path. While the embodiments herein refer to autonomous robots as real-world physical entities, it is to be appreciated that the operations discussed herein may be performed with other agents, such as digital entities in a virtual setting (e.g., video game characters and/or entities, entities within a simulation, and/or the like). Furthermore, the terms "robots" or "autonomous robots" used herein may encompass any type of robot or autonomous robot, such as autonomous vehicles, drones, and/or the like. For example, in some embodiments, a plurality of autonomous robots may comprise autonomous robots of different types, such as autonomous robots, vehicles, drones, and/or the like.

In some examples, a map of a space to be navigated may be used to determine paths for robots. In some examples, the map may be sampled randomly or discretized into grids or graphs that establish potential nodes among which robots can traverse. Various approaches attempt to avoid collisions while robots move along their planned paths. For instance, a reservation-based approach allows a robot to limit traversal to certain nodes for a specific time period to ensure that no other robot will visit the node during that time period. In other approaches, a prioritizing scheme may be utilized that produces a preferred order for scheduling robots one-by-one in order to improve the prospect of finding a valid solution. A conflict-based search approach looks for paths in a constrained search space where robots are instructed in turn to refrain from entering the place at a time at which a collision was detected. In some example approaches, collision conditions may also be encoded into logical formulas in order to find paths without conflicts. In this regard, all of these example approaches aim at either finding any non-conflicting paths or reducing the total lengths of all paths. In these example approaches, a robot is given a detailed path (e.g., paths having a large amount of waypoints) which the robot must follow strictly, e.g., arriving at each given node at a designated time, in order to avoid collision. These approaches tend to focus on supporting strictly-controlled robots, and not on robots comprising capabilities to navigate autonomously.

In this regard, using these approaches, autonomous robots are deprived of much of their autonomy in that the autonomous robots are strictly guided using a large amount of waypoints. Thus, the centralized planner is unnecessarily burdened with additional computational and processing tasks and storage of information regarding the robots. For example, using these approaches, the central path coordinator is required to access and/or store information related to intrinsic properties of the autonomous robots in order to plan optimally. As one example, if a robot requires full network coverage along a path, the central path coordinator must retrieve and/or store that information and factor that information in when planning paths for the robot. However, this is a task that is much better left for an autonomous robot to perform on its own. Moreover, in these example approaches, if an unexpected obstacle is encountered, a robot is left with no choice but to report that obstacle back to the central path coordinator, which in turn determines a new plan for that robot, and potentially for other robots as a result.

Embodiments described herein improve on existing approaches by determining a minimized waypoint set comprising a reduced or limited number of waypoints for each robot. In this regard, the robots retain autonomous functionality and traverse freely instead of having to follow a strict, rigid path. Embodiments herein address the problem of generating optimal plans for a plurality of autonomous robots while guaranteeing safety (e.g., conflict-free traversal) and efficiency using a minimal number of waypoints. In particular, a path set for multiple autonomous robots (e.g., as generated by multi-robot path planners) is reduced into sequences of a few waypoints per robot by gradually eliminating unnecessary waypoints from the plans. This waypoint reduction process is performed while intermediately validating that safety is preserved (e.g., conflicts between robots are avoided) during elimination. Embodiments herein leave as much autonomy as possible for the autonomous robots to select their own paths or routes (e.g., between waypoints). A path set solution comprising a reduced number of waypoints is generated and provided to autonomous robots, ensuring conflict-free traversal of paths by a plurality of robots.

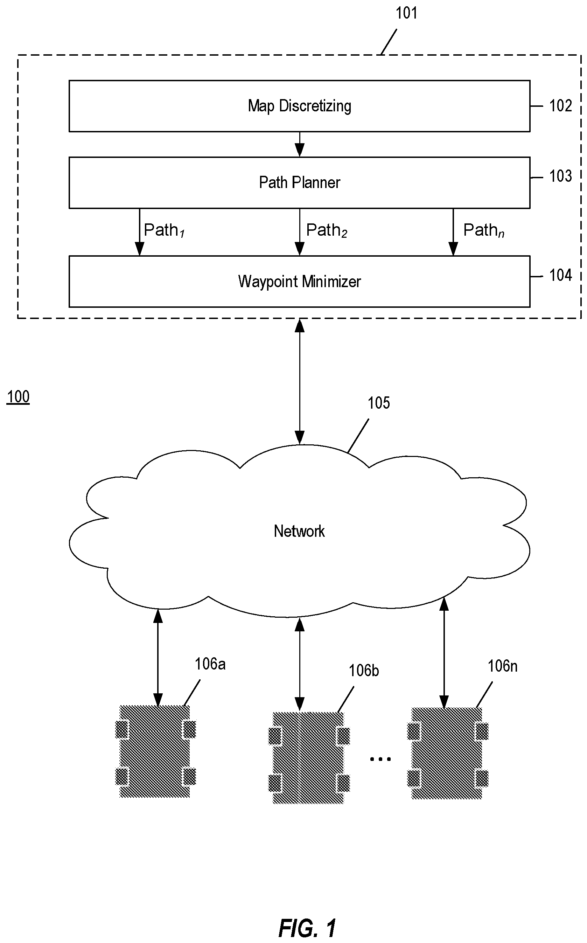

Referring now to FIG. 1, an example system 100 within which embodiments disclosed herein may operate is illustrated. It will be appreciated that the system 100 as well as the illustrations in other figures are each provided as an example of some embodiments and should not be construed to narrow the scope or spirit of the disclosure in any way. In this regard, the scope of the disclosure encompasses many potential embodiments in addition to those illustrated and described herein. As such, while FIG. 1 illustrates one example of a configuration of such a system, numerous other configurations may also be employed. In some embodiments the system 100 includes a robotic orchestration system 101 configured to interact with one or more robots 106a-n. In some embodiments, the robotic orchestration system 101 is configured to cause transmission of data, such as one or more path set solutions, to the robots 106a-n, e.g., via a network 105.

The robotic orchestration system 101 may communicate with the robots 106a-n and/or other external computing devices using a network 105. The network 105 may include any wired or wireless communication network including, for example, a wired or wireless local area network (LAN), personal area network (PAN), metropolitan area network (MAN), wide area network (WAN), or the like, as well as any hardware, software and/or firmware required to implement it (such as, e.g., network routers, etc.). For example, the network 105 may include a cellular telephone, an 802.11, 802.16, 802.20, and/or WiMax network. Further, the network 105 may include a public network, such as the Internet, a private network, such as an intranet, or combinations thereof, and may utilize a variety of networking protocols now available or later developed including, but not limited to Transmission Control Protocol/Internet Protocol (TCP/IP) based networking protocols. For instance, in some examples, the networking protocol may be customized to suit the needs of the robotic orchestration system 101.

In some embodiments, the robotic orchestration system 101 can optionally comprise map discretizing circuitry 102. In an embodiment, the map discretizing circuitry 102 can comprise one or more predefined functions and/or commands for discretizing a map, and/or the like. A map may be discretized in order for a computing system (e.g., robotic orchestration system 101) to more efficiently process the map and/or plan paths for autonomous robots. For example, the map discretizing circuitry 102 may receive, as input, a map file or the like comprising a digital representation of an environment in which multiple robots are to traverse. The map discretizing circuitry 102 may then discretize the received map into one or more grids, graphs, and/or the like to identify and/or define a plurality of locations (e.g., location coordinates and/or the like) that are accessible to the autonomous robots.

In some embodiments, the robotic orchestration system 101 can optionally comprise path planner circuitry 103. In an embodiment, the path planner circuitry 103 can comprise one or more predefined functions and/or commands for generating one or more paths for autonomous robots to traverse and/or the like. For example, the path planner circuitry 103 may receive, as input, a discretized map (e.g., the output of map discretizing circuitry 102) and generate a path set that includes paths having a sequence of locations (e.g., waypoints) on the map that robots are to follow in order to reach a respective destination.

In some embodiments, the robotic orchestration system 101 may not include the map discretizing circuitry 102 and the path planner circuitry 103. For example, in some embodiments, these circuitries are external to the robotic orchestration system 101, and the robotic orchestration system 101 may receive, access, or otherwise obtain a path set comprising a plurality of paths (e.g., generated externally by a path planner circuitry 103). In this regard, the path set obtained by the robotic orchestration system 101 may have been generated using map discretizing circuitry 102 and path planner circuitry 103 at a different system or device.

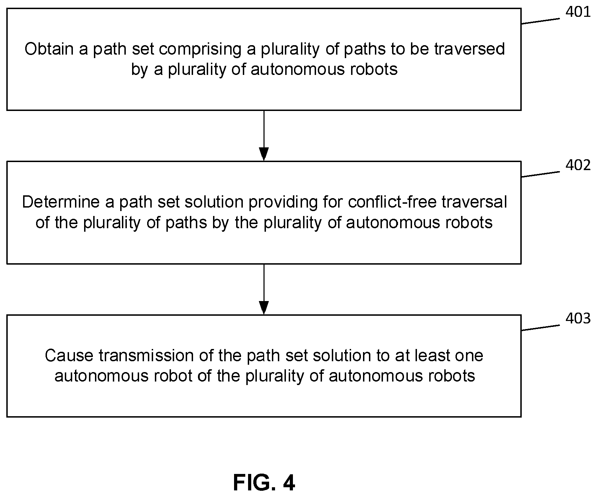

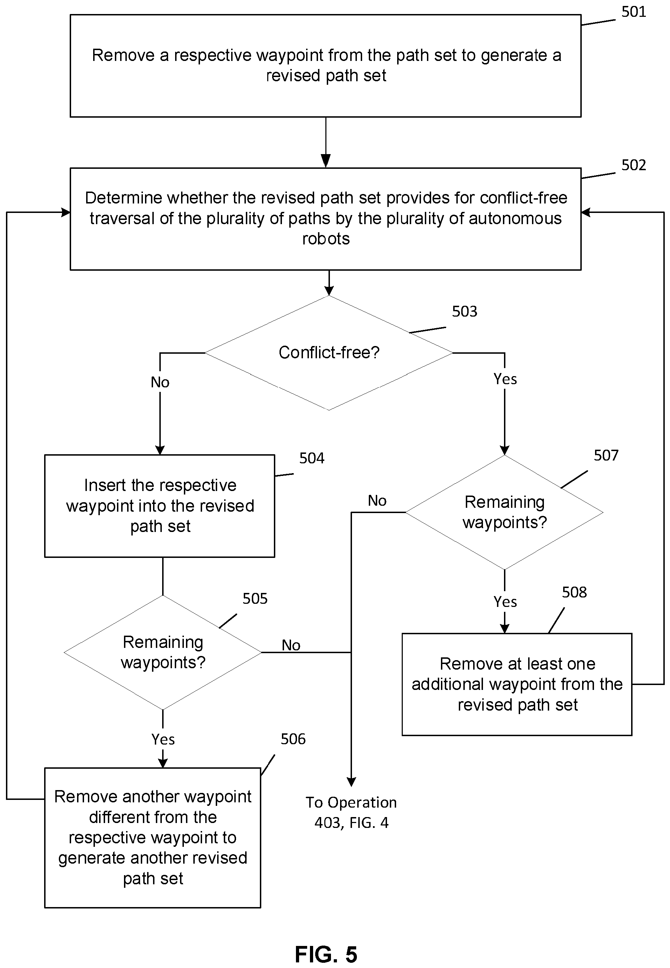

In some embodiments, the robotic orchestration system 101 comprises waypoint minimizer circuitry 104. In an embodiment, waypoint minimizer circuitry 104 determines a path set solution from a path set obtained by the robotic orchestration system 101. In some embodiments, determining the path set solution comprises eliminating waypoints of the obtained path set while preserving conflict-free traversal of the paths by the autonomous robots. Further detail regarding the waypoint minimizer circuitry 104 is described below in connection with the operations of FIGs. 4 and 5.

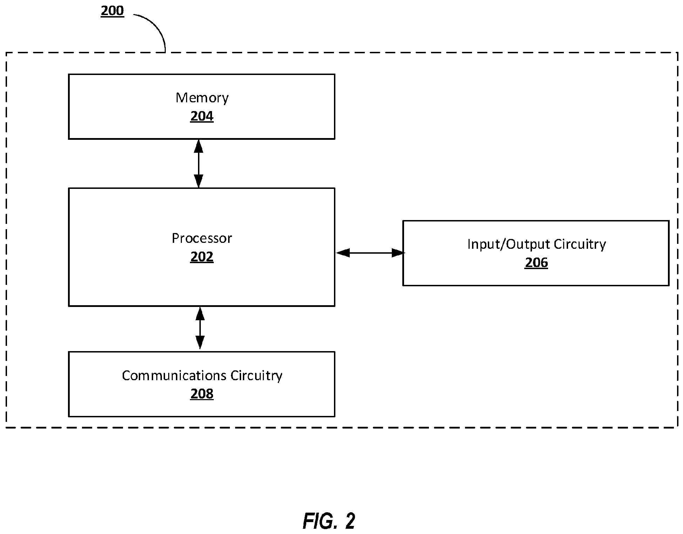

The robotic orchestration system 101 or robot 106a-n may be embodied by one or more computing systems, such as apparatus 200 shown in FIG. 2. In some embodiments, the robotic orchestration system 101 and a robot 106a-n may be embodied together as one computing system, in that the robot 106a-n may comprise map discretizing circuitry 102, path planner circuitry 103, and/or waypoint minimizer circuitry 104 such that the determination of a path set solution may be performed by a robot 106a-n. The apparatus 200 may include processor 202, memory 204, input/output circuitry 206, and communications circuitry 208. The apparatus 200 may be configured to execute the operations described herein. Although these components 202-208 are described with respect to functional limitations, it should be understood that the particular implementations necessarily include the use of particular hardware. It should also be understood that certain of these components 202-208 may include similar or common hardware. For example, two sets of circuitries may both leverage use of the same processor, network interface, storage medium, or the like to perform their associated functions, such that duplicate hardware is not required for each set of circuitries.

In some embodiments, the processor 202 (and/or co-processor or any other processing circuitry assisting or otherwise associated with the processor) may be in communication with the memory 204 via a bus for passing information among components of the apparatus. The memory 204 is non-transitory and may include, for example, one or more volatile and/or non-volatile memories. In other words, for example, the memory 204 may be an electronic storage device (e.g., a computer-readable storage medium). The memory 204 may be configured to store information, data, content, applications, instructions, or the like for enabling the apparatus to carry out various functions in accordance with example embodiments disclosed herein.

The processor 202 may be embodied in a number of different ways and may, for example, include one or more processing devices configured to perform independently. In some preferred and non-limiting embodiments, the processor 202 may include one or more processors configured in tandem via a bus to enable independent execution of instructions, pipelining, and/or multithreading. The use of the term "processing circuitry" may be understood to include a single core processor, a multi-core processor, multiple processors internal to the apparatus, and/or remote or "cloud" processors.

In some embodiments, the processor 202 may be configured to execute instructions stored in the memory 204 and/or circuitry otherwise accessible to the processor 202, such as map discretizing circuitry 102, path planner circuitry 103, and/or waypoint minimizer 104. In some embodiments, the processor 202 may be configured to execute hard-coded functionalities. As such, whether configured by hardware or software methods, or by a combination thereof, the processor 202 may represent an entity (e.g., physically embodied in circuitry) capable of performing operations according to an embodiment disclosed herein while configured accordingly. Alternatively, as another example, when the processor 202 is embodied as an executor of software instructions, the instructions may specifically configure the processor 202 to perform the algorithms and/or operations described herein when the instructions are executed.

In some embodiments, the apparatus 200 may include input/output circuitry 206 that may, in turn, be in communication with processor 202 to provide output to a user and/or other entity and, in some embodiments, to receive an indication of an input. The input/output circuitry 206 may comprise a user interface and may include a display, and may comprise a web user interface, a mobile application, a query-initiating computing device, a kiosk, or the like. In some embodiments, the input/output circuitry 206 may also include a keyboard, a mouse, a joystick, a touch screen, touch areas, soft keys, a microphone, a speaker, or other input/output mechanisms. The processor and/or user interface circuitry comprising the processor may be configured to control one or more functions of one or more user interface elements through computer program instructions (e.g., software and/or firmware) stored on a memory accessible to the processor (e.g., memory 204, and/or the like).

The communications circuitry 208 may be any means such as a device or circuitry embodied in either hardware or a combination of hardware and software that is configured to receive and/or transmit data from/to a network and/or any other device, circuitry, or module in communication with the apparatus 200. In this regard, the communications circuitry 208 may include, for example, a network interface for enabling communications with a wired or wireless communication network. For example, in embodiments in which the robotic orchestration system 101 and a robot 106a-n are embodied together as one computing system, such that the robot 106a-n comprises map discretizing circuitry 102, path planner circuitry 103, and/or waypoint minimizer circuitry 104, the apparatus 200 (e.g., robot 106a-n) may cause transmission, via the communications circuitry 208, of a path set solution to one or more other robots 106a-n. For example, the communications circuitry 208 may include one or more network interface cards, antennae, buses, switches, routers, modems, and supporting hardware and/or software, or any other device suitable for enabling communications via a network. Additionally, or alternatively, the communications circuitry 208 may include the circuitry for interacting with the antenna/antennae to cause transmission of signals via the antenna/antennae or to handle receipt of signals received via the antenna/antennae.

It is also noted that all or some of the information discussed herein can be based on data that is received, generated and/or maintained by one or more components of apparatus 200. In some embodiments, one or more external systems (such as a remote cloud computing and/or data storage system) may also be leveraged to provide at least some of the functionality discussed herein.

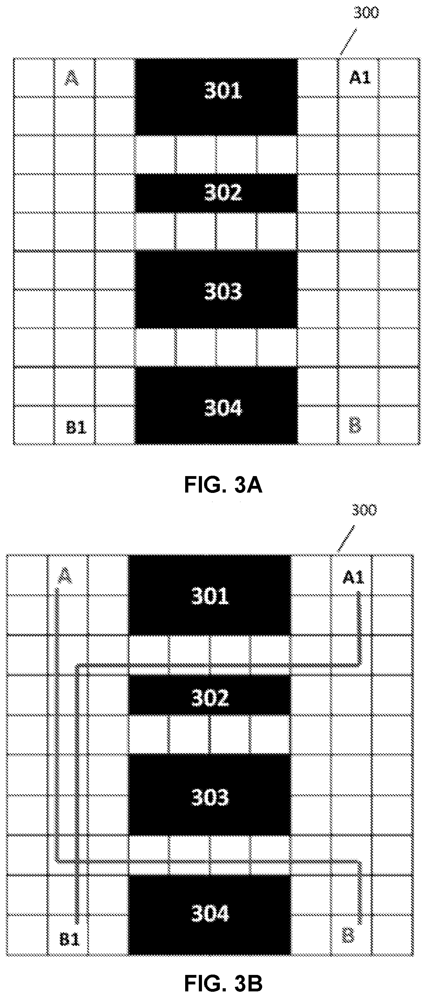

FIGs. 3A-3F illustrate example representations of example waypoint minimization for a plurality of autonomous robots in accordance with some embodiments. As described above, eliminating unnecessary waypoints from a path set for a plurality of autonomous robots while still ensuring that the path set provides for conflict-free traversal by the autonomous robots enables the autonomous robots to retain autonomy and make autonomous decisions internally while lessening a computational burden on a server (e.g., robotic orchestration system 101) and/or bandwidth over a network.

FIGs. 3A-3F show an example space 300 in which a plurality of autonomous robots are to traverse respective paths from a starting location to an ending location. The example space includes regions 301, 302, 303, and 304 which the autonomous robots are unable to traverse (shown in the black tiles). For example, these regions may include physical barriers, such as walls, pillars, and/or other stationary objects such as desks and/or regions that are otherwise inaccessible. In this example, two autonomous robots, a first robot and a second robot, are required to travel respective paths. The first robot is to travel from starting location A to ending location B, while the second robot is to travel from starting location A1 to ending location B1. For example purposes, two robots are described with reference to FIGs. 3A-3F. However, it is to be appreciated that more than two robots may also be traversing the space 300.

Each robot, being autonomous, is aware of its location at any time, stores and/or otherwise has access to a map of the space 100, may comprise one or more sensors for localization, detection, and/or the like, and is capable of autonomously navigating within the space 100 between locations without additional guidance. For example, if just one robot were to traverse the space 100, the robot, being provided with an ending location, would be able to autonomously navigate to that ending location.

However, for example, if the first robot and the second robot were to navigate completely autonomously (e.g., without any provided waypoints other than respective ending locations), they may each determine to traverse the corridor between regions 301 and 302 in order to arrive at ending locations B and B1, resulting in a collision and/or other conflict and requiring external coordination and/or intervention to resolve the conflict and/or further assist the robots to their destination. In this regard, each robot is unaware of instructions given to the other robot and/or not communicating with the other robot to resolve conflicts.

In some embodiments, a robotic orchestration system 101 determines a path set for the autonomous robots. For example, path planner circuitry 103 may comprise a multi-agent path planning algorithm, which returns a path set comprising paths for each robot to traverse from respective starting locations to ending locations, with the path set providing for conflict-free traversal by the robots (e.g., if the robots follow the assigned paths of the path set, no collisions, deadlocks, livelocks, and/or the like will occur). For example, as shown in FIG. 3B, a path set for the two robots is determined, with a path for the first robot between starting location A and ending location B traversing between regions 303 and 304, and a path for the second robot between starting location A1 and ending location B1 traversing between regions 301 and 302.

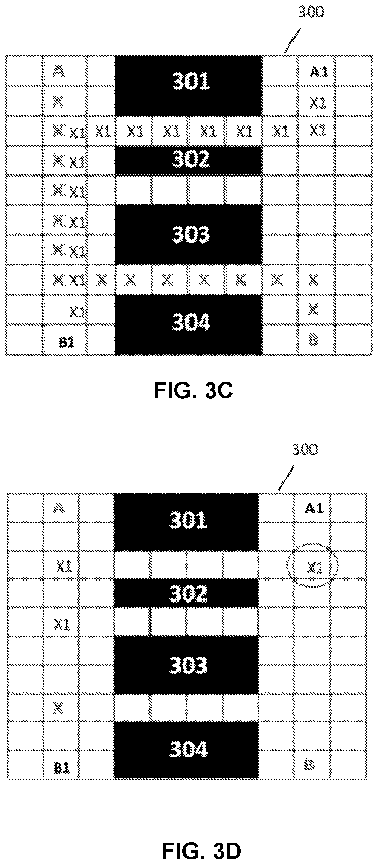

In some embodiments, a map of the space in which the robots are to traverse may be discretized prior to a path set being determined for the robots, e.g., via map discretizing circuitry 102. In this regard, the robotic orchestration system 101 may discretize the map to determine potential positions for a robot and paths between the positions which the robot can move between. Discretization of the map allows for the robotic orchestration system 101 to utilize a discrete, finite, and much smaller state space than considering the entire map. Once the map is discretized, it may be provided to the path planner circuitry 103, which may then determine the path set for the robots. The paths of the path set comprise a sequence of consecutive waypoints (e.g., based on positions determined by the map discretizing circuitry 102). For example, as shown in FIG. 3C, the paths for each robot are divided into a sequence of waypoints defining locations at which a respective autonomous robot is to traverse during a traversal of the respective path. For example, the waypoints for the path of the first robot are indicated as X, and the waypoints for the path of the second robot are indicated as X1. In some embodiments, a respective waypoint is associated with a spatial location of the space (e.g., location coordinates and/or other spatial information) and a timestamp indicating a time at which the robot is to arrive at the respective waypoint during traversal of the path. In some embodiments, the timestamp may be expressed as a unit of time (e.g., a predefined integer). For example, along a path of waypoints, a respective robot may be expected to arrive at each waypoint in one unit of time.

Assuming the robots travel at the same speed, e.g., one waypoint every time unit, this determined path set is conflict-free such that the robots will arrive at their respective destinations. However, as these paths have a large number of waypoints, the robots are deprived of much of their autonomy in that control of the movement of a robot is over a very short distance (e.g., per vertex/edge on a graph) and a very short time (e.g., one unit). In this regard, in order to lessen the computational load on the robot orchestration system 101 and provide more autonomous functionality to the robots, a waypoint removal process is performed. FIG. 4 illustrates operations that are performed by the apparatus 200 (e.g., when embodied by robotic orchestration system 101 or robot 106a-n) in some example embodiments.

As shown, at operation 401, the apparatus includes means, such as the processor 202, the communications circuitry 208, and/or the like, for obtaining a path set comprising a plurality of paths to be traversed by a plurality of autonomous robots. For example, as described above, a respective path of the plurality of paths comprises a plurality of waypoints defining locations and timestamps at which a respective autonomous robot is to traverse during a traversal of the respective path. In some embodiments, the path set may be determined by the robotic orchestration system 101, e.g., via the map discretizing circuitry 102 and path planner circuitry 103. In this regard, the robotic orchestration system 101 includes means, such as the processor 202, the map discretizing circuitry 102, the path planner circuitry 103, and/or the like, for determining a path set comprising a plurality of paths to be traversed by a plurality of autonomous robots. However, in some embodiments, the path set may be determined externally from the robotic orchestration system 101, such that the path set is received, accessed, or otherwise obtained by the robotic orchestration system 101.

In some embodiments, the path set may be obtained in response to a request provided by one or more autonomous robots. For example, in some embodiments, the apparatus 200 (e.g., when embodied by the robotic orchestration system 101) includes means, such as processor 202, communications circuitry 208, and/or the like, for receiving a request for a path set solution. In some embodiments, the request may comprise one or more indications. The indications may include, for example, an identifier of one or more autonomous robots, an identifier of the request (e.g., a request identification number), a location (e.g., a current location) of the robot and/or one or more additional robots, a starting location for the autonomous robot(s), and/or an ending location for the autonomous robot(s), and/or other indications. In this regard, the apparatus 200 (e.g., when embodied by a robot 106a-n) includes means, such as processor 202, communications circuitry 208, and/or the like, for causing transmission of a request for a path set solution, the request comprising one or more indications.

In some embodiments, the path set may be received by the robotic orchestration system 101 from an autonomous robot 106a-n. In this regard, in some embodiments, the robotic orchestration system 101 includes means, such as the processor 202, communications circuitry 208, and/or the like, for receiving a path set from at least one autonomous robot of a plurality of autonomous robots. For example, in some embodiments, an autonomous robot may comprise path planner circuitry (and optionally map discretizing circuitry) such that an autonomous robot may determine a path set. In this regard, the apparatus 200 (e.g., when embodied by an autonomous robot 106a-n) includes means, such as the processor 202, the map discretizing circuitry 102, the path planner circuitry 103, and/or the like, for determining a path set comprising a plurality of paths to be traversed by a plurality of autonomous robots.

At operation 402, the apparatus includes means, such as the processor 202, the waypoint minimizer circuitry 104, and/or the like, for determining a path set solution providing for conflict-free traversal of the plurality of paths by the plurality of autonomous robots. For example, the path set solution may comprise at least one less waypoint than the path set obtained by the robotic orchestration system 101. In this regard, a waypoint removal process may be performed using the obtained path set in order to determine a path set solution with a reduced number of waypoints. In some embodiments, determining the path set solution comprises removing at least one waypoint from the path set while ensuring that the path set solution from which the at least one waypoint has been removed provides for conflict-free traversal. In some embodiments, for example, the path set solution comprises a minimal number of waypoints needed such that the plurality of autonomous robots are able to traverse their respective paths without encountering conflicts with other robots. Further, in other example embodiments, the robot orchestration system 101 (e.g., including waypoint minimizer circuitry 104) may be embodied by an autonomous robot (e.g., a robot 106a-n), such that the determination of the path set solution may be performed at the autonomous robot.

In some embodiments, the path set solution comprises one or more waypoints, wherein a respective waypoint of the path set solution is associated with a spatial location (e.g., location coordinates and/or the like) and a time budget. The time budget defines an amount of time granted to a respective autonomous robot to arrive at the respective waypoint.

In some embodiments, determining the path set solution comprises performing a waypoint removal process for a respective waypoint of the path set. In some embodiments, the waypoint removal process may be performed for each waypoint of the obtained path set.

FIG. 5 illustrates an example waypoint removal process. The process begins at operation 501, wherein the apparatus includes means, such as the processor 202, the waypoint minimizer circuitry 104, and/or the like, for removing a respective waypoint from the path set to generate a revised path set. In this regard, a waypoint from a path of the path set may be selected to be removed and a revised set comprising the path set having the waypoint removed is analyzed as to whether the waypoint should remain removed from the path set.

In some embodiments, the apparatus 200 may select the waypoint to be removed in a variety of manners. For example, the waypoint may be selected to be removed based on a predefined order of the paths and/or waypoints of the path set. For example, a first waypoint of a first path may be selected as the first waypoint to be removed. In some embodiments, the waypoint may be selected to be removed randomly. In some embodiments, the waypoint may be selected to be removed based on a heuristic, e.g., beginning with waypoints that are farthest way from intersections on the map and/or other properties of the map.

At operation 502, the apparatus includes means, such as the processor 202, the waypoint minimizer circuitry 104, and/or the like, for determining whether the revised path set provides for conflict-free traversal of the plurality of paths by the plurality of autonomous robots. In some embodiments, determining whether the revised path set provides for conflict-free traversal of the plurality of paths by the plurality of autonomous robots is based on an output of a state-of-art Boolean satisfiability (SAT) solver.

A SAT solver is a tool that can prove or disprove satisfiability of a propositional formula expressed in conjunctive normal form (CNF), such as, for example, (x or y or not-z) and (x or not-t or not-y). A SAT solver is able to handle large formulae in a very efficient manner. In this regard, validating whether a path set is conflict-free may be determined by providing a traversal formula (e.g., a SAT formula) based on a revised path set to a SAT solver, such that the formula is satisfiable if and only if the solution is unsafe (e.g., not conflict-free).

Thus, if the SAT solver proves satisfiability, the revised path set is determined to be unsafe, and if non-satisfiability is proven, the revised path set is safe (e.g., conflict-free). In some embodiments, such reduction to SAT solver can be performed by encoding the possible position of each robot at each point in time into a variable, the potential moves for each robot as relations between the variables (e.g., encoded as CNF clauses), and the safety property as one or more clauses representing that there exist two robots that can satisfy the requirements and reach a conflict (e.g., a collision). If the SAT solver proves the formula to be satisfiable, then a potential path to a collision is found, and the solution is unsafe. If, on the other hand, the formula is proven to be unsatisfiable, then no such collision can occur, and the revised path set is conflict-free.

More specifically, Boolean variables X(a,t,n) may be defined representing whether robot a is at position n at time t. The map (e.g., including its static obstacles such as walls and/or the like) is encoded as conditions on pairs X(a,t,n) and X(a,t+1,n'), which guarantees that robots move according to the map without colliding with any static obstacles and the distances that may be traveled in one time step. Additionally, it may also be guaranteed that no X(a,t,n) and X(a',t,n) can be 1 (e.g., true) for a != a' (that is, no two robots are in the same position at the same time). In some embodiments, this is encoded as the inverse, e.g., it is encoded in the traversal formula that there exists such a, a', t, n that represents a collision, and if the SAT solver proves the formula to be unsatisfiable, it is ensured that no conflicts can occur.

Alternatively, in some embodiments, determining whether the revised path set provides for conflict-free traversal of the plurality of paths by the plurality of autonomous robots is based on a determination as to whether coverage areas of the plurality of autonomous robots overlap if the plurality of autonomous robots were to traverse in accordance with the revised path set. A coverage area refers to an area in which a robot can travel to given the time budget and starting location and/or ending (e.g., goal) location. Said differently, it can be determined that two or more robots will not collide or otherwise conflict with each other during a time interval if their corresponding coverage areas do not overlap.

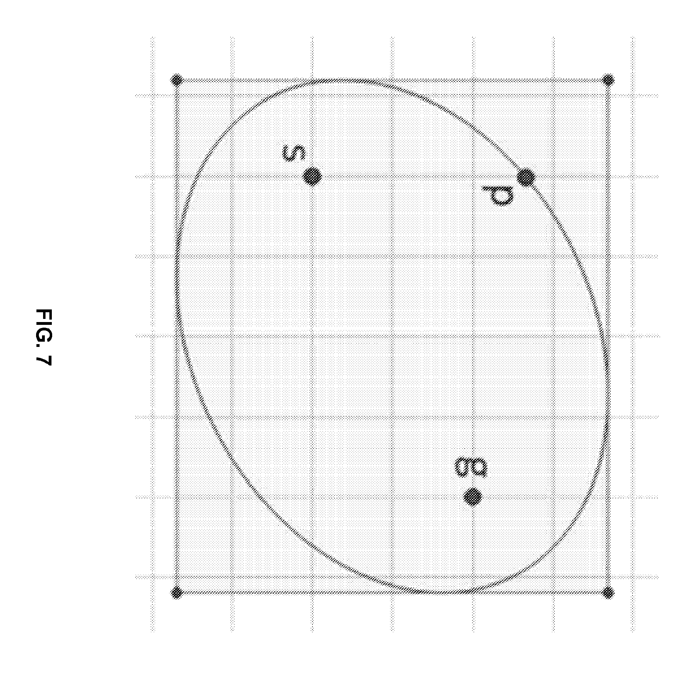

As an example, as shown in FIG. 7, for a first robot, having a maximum speed v, starting at location s (at time tₛ) and having an ending location g (reaching the ending location at time t_{g}, the possible area of travel or coverage area is represented by the ellipse shown. In this regard, two robots will not conflict if their coverage areas (e.g., bounding ellipses) do not overlap. In determining points or locations where two autonomous robots might collide, the coverage area at a point p may be analyzed by cov(s, tₛ, g, t_{g}) = {p | shortest(s, p) + shortest(p, g) ≤ (t_{g}-tₛ) * v} wherein shortest() returns a shortest path between two points.

If two coverage areas do not overlap, the robots will not conflict. Otherwise, for each point p, an earliest and latest time each robot be at point p, e.g., [tₛ + shortest(s, p) / v, t_{g} - (shortest(p, g) - c) / v]. In this regard, if the time intervals intersect, the robots will conflict. Waypoints may be added that correspond to a midpoint of the interval for each conflicting robot. In some embodiments, checking may be needed among simultaneous segments with intersecting [tₛ, t_{g}]. In some embodiments, this procedure may also be used to remove waypoints, e.g., removing a waypoints yields a new segment, and a check may be performed against its simultaneous segments.

In some embodiments, additional parameters may be used in the determination as to whether a revised path set provides for conflict-free traversal. For example, in example embodiments in which the autonomous robots 106a-n comprise airborne drones, such as drones delivering packages and/or other goods, additional parameters may be factored in to the determination of conflict-free traversal. For example, these example drones may be required to visit locations such as charging stations or the like throughout traversal from a starting location to an ending location or destination in order to charge a battery of the drone and/or exchange good carried to another drone and/or the like. In this regard, additional parameters such as charging time(s), length of travel, battery consumption, and/or the like may be used in the determination as to whether a revised path set provides for conflict-free traversal.

At decision point 503, if the revised path set is determined to not be conflict-free (e.g., based on output of the SAT solver or coverage area approach), the waypoint removal process may continue to operation 504, wherein the apparatus includes means, such as the processor 202, the waypoint minimizer circuitry 104, and/or the like, for inserting the respective waypoint into the revised path set. In this regard, as the path set was conflict-free, and removing the respective waypoint resulted in the revised path set having conflict(s), the waypoint can be inserted back into the path set and another waypoint may be selected for removal.

In some embodiments, a determination as to whether waypoints remain in the path set that have not yet been analyzed in the waypoint removal process may be performed as shown in decision point 505. In this regard, the apparatus includes means, such as the processor 202, the waypoint minimizer circuitry 104, and/or the like, for determining whether waypoints remain in the path set that have not yet been analyzed. Upon a determination that one or more waypoints remain in the path set that have not yet been analyzed, the waypoint removal process continues to operation 506 wherein the apparatus includes means, such as the processor 202, the waypoint minimizer circuitry 104, and/or the like, for removing another waypoint, different from the respective waypoint, to generate another revised path set. The process then returns to operation 502, wherein it is determined whether the revised path set generated in operation 506 provides for conflict-free traversal of the plurality of paths by the plurality of autonomous robots.

Returning to decision point 503, if the revised path set is determined to be conflict-free, the waypoint removal process may continue to decision point 504, wherein the apparatus includes means, such as the processor 202, the waypoint minimizer circuitry 104, and/or the like, for determining whether waypoints remain in the revised path set that have not yet been analyzed. Upon a determination that waypoints remain in the path set that have not yet been analyzed, the waypoint removal process continues to operation 507, wherein the apparatus includes means, such as the processor 202, the waypoint minimizer circuitry 104, and/or the like, for removing at least one additional waypoint from the revised path set. The waypoint removal process may then recursively return to operation 502, wherein it is determined whether the revised path set having the respective waypoint removed (e.g., the waypoint removed in operation 501) and at least one additional waypoint removed provides for conflict-free traversal of the plurality of paths by the plurality of autonomous robots.

To further illustrate the waypoint removal process, as shown in FIG. 3D, the circled X1 waypoint on the path of the second robot (from starting location A1 to ending location B1) is selected for removal. Once removed, a determination as to whether the resulting path set having the waypoint removed is still conflict-free (e.g., using a SAT solver as described in operation 502 above). In this example of FIG. 3D, it is conflict-free, e.g., any path that the two robots choose, which goes through the waypoints defined is still proven to be conflict-free. In this example, it can be seen that even without the circled X1 waypoint, the first robot is still to traverse between regions 303 and 304 (due to the X waypoint), and the second between regions 301 and 302 (due to the remaining two X1 waypoints).

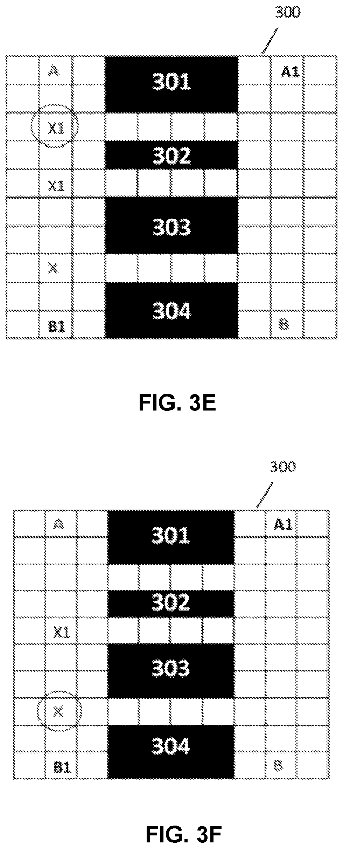

Next, in FIG. 3E, another circled X1 waypoint is removed. It can be seen that if the circled X1 waypoint is removed, more choices become available for the second robot, e.g., the second robot can now traverse between regions 301 and 302 or between regions 302 and 303 to arrive at ending location B1. However, conflict avoidance is still guaranteed, as the first robot is still to traverse between regions 303 and 304 due to the X waypoint. Therefore, eliminating the circled X1 waypoint is safe, even though it does allow for more paths to be chosen by the autonomous robot. Thus, the waypoint removal process not only maintains the paths but also enables more paths to be valid for the autonomous robots, while still ensuring conflict avoidance.

As a further example, in FIG. 3F, another circled X waypoint is removed. However, as can be seen, if the circled X waypoint were removed, the resulting path set would no longer be conflict-free, as both robots may choose to traverse between regions 301 and 302 or between regions 302 and 303 and result in a collision and/or other conflict. Therefore, the circled X waypoint should not be removed, and instead should inserted back into the path set. Similarly, the one remaining X1 waypoint cannot be removed, and as no further waypoints are to be analyzed, the example waypoint removal process completes, having generated a path set solution comprising two waypoints, as shown in FIG. 3F.

In some embodiments, a timeout may be associated with the waypoint removal process. In this regard, the waypoint removal process may continue recursively executing and removing waypoints until each waypoint of the plurality of waypoints is analyzed or a predefined time has elapsed. For example, the waypoint removal process may stop executing and return a path set solution upon the predefined time elapsing. In some embodiments, the path set solution that is returned upon the predefined time elapsing may have removed at least one waypoint from the path set while ensuring conflict-free traversal, however, may not have analyzed all waypoints before the predefined time elapsed.

In some embodiments, the waypoint removal process may continue until each waypoint of the plurality of waypoints is analyzed. In this regard, upon a determination (e.g., at decision point 505 or 507) that no remaining waypoint remain that have not been analyzed, the waypoint removal process may end and proceed to operation 403 of FIG. 4, wherein the apparatus includes means, such as the processor 202, the waypoint minimizer circuitry 104, and/or the like, for causing transmission of the path set solution to at least one autonomous robot of the plurality of autonomous robots. The path set solution comprises a plurality of paths having a minimal number of waypoints necessary to avoid conflicts between the autonomous robots. In this regard, the number of waypoints that each robot must visit is reduced in order to leave room for autonomous behavior, e.g., reaction to local and/or unforeseen obstacles and/or other conditions, and/or for the autonomous robot to optimize other aspects that the robotic orchestration system 101 is unaware of, such as mechanical aspects specific to the robot and/or the like. In some embodiments, in causing transmission of the path set solution to at least one autonomous robot of the plurality of autonomous robots, the at least one robot may be provided with only its respective path (e.g., waypoints) of the path set solution, and not waypoints for other robots in the plurality of autonomous robots.

In some embodiments, alternatively or in addition to causing transmission of the path set solution to at least one autonomous robot of the plurality of autonomous robots, the apparatus 200 (e.g., when embodied by a robot 106a-n), includes means, such as the processor 202, memory 204, and/or the like, for traversing to a respective waypoint of the path set solution in accordance with the time budget. In this regard, upon determining a path set solution, a robot may traverse to a waypoint based on the determined path set solution.

In some embodiments, each waypoint remaining in the path set solution is associated with a time budget defining an amount of time granted to arrive at the respective waypoint. In some embodiments, the time budget may be based on the original timestamp value of the waypoint in the obtained path set. In this regard, the autonomous robot(s) are provided with a time budget to reach a next waypoint, in that the robots are free to perform autonomous decisions and/or autonomously determine path(s) to the next waypoint within the time budget. In some embodiments, a time budget may define amount of time granted to arrive at the respective waypoint, such as, e.g., 7 seconds. In other words, a waypoint associated with a time budget of 7 seconds indicates that the robot has 7 seconds to reach the waypoint. In some embodiments, a time budget may define an amount of time not granted to arrive at the respective waypoint. In other words, a waypoint associated with a time budget of 10 seconds may indicate that the robot must arrive at the waypoint in under 10 seconds. A time budget may define the earliest or the latest time by which the robot must reach the waypoint, for example.

In some embodiments, the time budgets for respective waypoints may be determined and/or adjusted independent of waypoint minimization (e.g., maintaining a timestamp for a waypoint while removing other waypoints). For example, returning to FIG. 3F, using only waypoint reduction, the time budgets for waypoint X is 7 seconds and a time budget for waypoint X1 is 11 seconds (e.g., as they were obtained based on a shortest path and waypoint reduction). However, for example increasing the time budget for X1 from 11 seconds to 12 seconds also ensures that the path set solution provides for conflict-free traversal (as can be verified using the waypoint reduction process shown in FIG. 5), and also provides more autonomy to the robot to handle local obstacles and/or other delays.

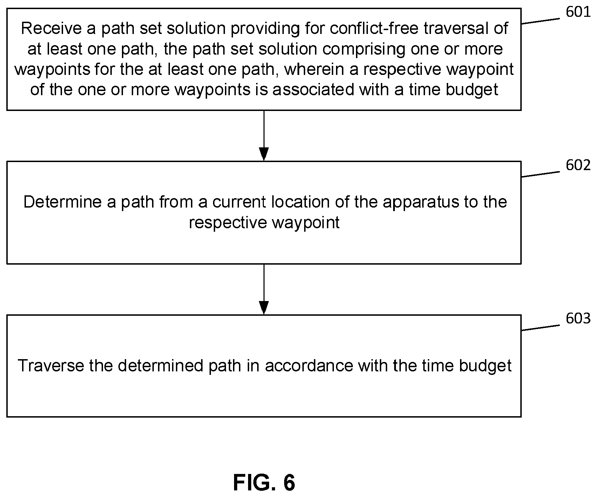

Turning to FIG. 6, example operations are shown that may be performed by the apparatus 200 (e.g., when embodiment by an autonomous robot 106a-n). As shown at operation 601, the apparatus includes means, such as the processor 202, the communications circuitry 208, and/or the like, for receiving a path set solution providing for conflict-free traversal of at least one path, the path set solution comprising one or more waypoints for the at least one path, wherein a respective waypoint of the one or more waypoints is associated with a time budget. For example, the path set solution may be received from the robotic orchestration system 101 upon the execution of operation 403 of FIG. 4.

At operation 602, the apparatus includes means, such as the processor 202, the memory 204, and/or the like, for determining a path from a current location of the apparatus to the respective waypoint. In this regard, the autonomous robot may autonomously determine an appropriate path based on at least one waypoint of the received path set solution. For example, using the time budget of a next waypoint, the robot may perform movements and/or other decisions autonomously as needed, given any obstacles and/or other circumstances between the location of the robot and the waypoint. At operation 603, the apparatus includes means, such as the processor 202, the memory 204, and/or the like, for traversing the determined path in accordance with the time budget.

As described above, a method, apparatus, and computer program product are disclosed for determining path set solution comprising a minimal or reduced number of waypoints for a plurality of autonomous robots that ensures conflict-free traversal of paths by the plurality of autonomous robots. Technical benefits include a reduction in computational load and/or processing by a robotic orchestration system and increased autonomy for the autonomous robots while ensuring avoidance inter-robot conflicts.

FIGs. 4, 5, and 6 illustrate flowcharts depicting methods according to an example embodiment of the present invention. It will be understood that each block of the flowcharts and combination of blocks in the flowcharts may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory 304 of an apparatus employing an embodiment of the present invention and executed by a processor 302. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

The scope of the invention is set out in the attached claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. Although specific terms are employed herein, they are used in a generic and descriptive sense only and not for purposes of limitation.

## Claims

1. An apparatus (200) comprising:
at least one processor (202); and
at least one memory (204) including instructions, the at least one memory (204) and the instructions configured to, with the at least one processor (202), cause the apparatus (200) to:
obtain a path set comprising a plurality of paths to be traversed by a plurality of autonomous robots (106), a respective path of the plurality of paths comprising a plurality of waypoints (X, X1) defining locations at which a respective autonomous robot (106) is to traverse during a traversal of the respective path; and
determine, based at least on the path set, a path set solution, wherein a respective waypoint (X, X1) of the path set solution is associated with a spatial location and a time budget, the time budget defining an amount of time granted to a respective autonomous robot (106) to arrive at the respective waypoint (X, X1), wherein the path set solution provides for conflict-free traversal of the plurality of paths by the plurality of autonomous robots (106), and wherein the at least one memory (204) and the instructions configured to determine the path set solution are further configured to, with the at least one processor (202), cause the apparatus (200) to remove at least one waypoint (X, X1) from the path set while ensuring that the path set solution from which the at least one waypoint (X, X1) has been removed provides for conflict-free traversal,
**characterized in that** in removing at least one waypoint (X, X1) from the path set, the at least one memory (204) and the instructions are configured to, with the at least one processor (202), cause the apparatus (200) to remove at least one waypoint (X, X1) which is unnecessary for providing for conflict-free traversal, wherein the traversal was conflict-free before removing the at least one waypoint (X, X1) from the path set and is still conflict-free after removing the at least one waypoint (X, X1) from the path set.

2. The apparatus (200) of claim 1, wherein the at least one memory (204) and the instructions configured to determine the path set solution are further configured to, with the at least one processor (202), cause the apparatus (200) to perform a waypoint removal process for a respective waypoint (X, X1) of the path set, the waypoint removal process comprising:
removing the respective waypoint (X, X1) from the path set to generate a revised path set;
determining whether the revised path set provides for conflict-free traversal of the plurality of paths by the plurality of autonomous robots (106); and
in accordance with a determination that the revised path set does not provide for conflict-free traversal of the plurality of paths by the plurality of autonomous robots (106):
inserting the respective waypoint (X, X1) into the revised path set,
wherein determining the path set solution further comprises performing another iteration of the waypoint removal process by removing, from the path set, another waypoint (X, X1) different from the respective waypoint (X, X1) and determining whether the path set having the another waypoint (X, X1) removed provides for conflict-free traversal of the plurality of paths by the plurality of autonomous robots (106).

3. The apparatus (200) of claim 2, wherein the at least one memory (204) and the instructions are further configured to, with the at least one processor (202), cause the apparatus (200) to:
in accordance with a determination that the revised path set provides for conflict-free traversal of the plurality of paths by the plurality of autonomous robots (106):
perform at least one additional iteration of the waypoint removal process by removing at least one additional waypoint (X, X1) from the revised path set.

4. The apparatus (200) of any of claims 2 to 3, wherein the path set solution is determined in response to having each waypoint (X, X1) of the plurality of waypoints (X, X1) analyzed using the waypoint removal process.

5. The apparatus (200) of any of claims 2 to 4, wherein determining whether the revised path set provides for conflict-free traversal of the plurality of paths by the plurality of autonomous robots (106) is based on an output of a state-of-art Boolean satisfiability, SAT, solver.

6. The apparatus of claim 5, wherein the output is determined based upon an input of a traversal formula to the SAT solver, and the at least one memory (204) and the instructions are further configured to, with the at least one processor (202), cause the apparatus (200) to:
provide the traversal formula to the SAT solver, wherein the traversal formula is based at least on the revised path set,
wherein the traversal formula comprises Boolean representations of respective autonomous robots (106) of the plurality of autonomous robots (106), positions of the respective autonomous robots (106), and times associated with the positions of the respective robots (106).

7. The apparatus of any of claims 1 to 6, wherein the path set provides for conflict-free traversal of the plurality of paths by the plurality of autonomous robots (106).

8. The apparatus (200) of any of claims 1 to 7, wherein ensuring that the path set solution from which the at least one waypoint has been removed provides for conflict-free traversal comprises ensuring that any route taken between respective waypoints (X, X1) by a respective autonomous robot (106) of the plurality of autonomous robots (106) in accordance with the time budget is conflict-free.

9. The apparatus (200) of any of claims 1 to 8, wherein the at least one memory (204) and the instructions configured to obtain the path set are further configured to, with the at least one processor (202), cause the apparatus (200) to receive the path set from at least one autonomous robot (106) of the plurality of autonomous robots (106).

10. The apparatus (200) of any of claims 1 to 9, wherein the at least one memory (204) and the instructions are further configured to, with the at least one processor (202), cause the apparatus (200) to:
cause transmission of the path set solution to at least one autonomous robot (106) of the plurality of autonomous robots (106).

11. The apparatus (200) of any of claims 1 to 9, wherein the apparatus (200) is embodied by an autonomous robot (106) of the plurality of autonomous robots (106).

12. The apparatus (200) of claim 11, wherein the at least one memory (204) and the instructions are configured to, with the at least one processor (202), cause the apparatus (200) to: cause transmission of the path set solution to at least one other autonomous robot (106) of the plurality of autonomous robots (106).

13. A computer program product comprising a computer readable storage medium (204) storing instructions which, when executed by an apparatus (200), cause the apparatus (200) at least to:
obtain a path set comprising a plurality of paths to be traversed by a plurality of autonomous robots (106), a respective path of the plurality of paths comprising a plurality of waypoints (X, X1) defining locations at which a respective autonomous robot (106) is to traverse during a traversal of the respective path; and
determine, based at least on the path set. a path set solution, wherein a respective waypoint (X, X1) of the path set solution is associated with a spatial location and a time budget, the time budget defining an amount of time granted to a respective autonomous robot (106) to arrive at the respective waypoint (X, X1), wherein the path set solution provides for conflict-free traversal of the plurality of paths by the plurality of autonomous robots (106), and wherein the instructions configured to determine the path set solution are further configured to cause the apparatus (200) to remove at least one waypoint (X, X1) from the path set while ensuring that the path set solution from which the at least one waypoint (X, X1) has been removed provides for conflict-free traversal,
**characterized in that** in removing at least one waypoint (X, X1) from the path set, the instructions are configured to cause the apparatus (200) to remove at least one waypoint (X, X1) which is unnecessary for providing for conflict-free traversal, wherein the traversal was conflict-free before removing the at least one waypoint (X, X1) from the path set and is still conflict-free after removing the at least one waypoint (X, X1) from the path set.

14. A method comprising:
obtaining a path set comprising a plurality of paths to be traversed by a plurality of autonomous robots (106), a respective path of the plurality of paths comprising a plurality of waypoints (X, X1) defining locations at which a respective autonomous robot (106) is to traverse during a traversal of the respective path; and
determining, based at least on the path set, a path set solution, wherein a respective waypoint (X, X1) of the path set solution is associated with a spatial location and a time budget, the time budget defining an amount of time granted to a respective autonomous robot (106) to arrive at the respective waypoint (X, X1), wherein the path set solution provides for conflict-free traversal of the plurality of paths by the plurality of autonomous robots (106), and wherein determining the path set solution comprises removing at least one waypoint (X, X1) from the path set while ensuring that the path set solution from which the at least one waypoint (X, X1) has been removed provides for conflict-free traversal,
**characterized in that** removing at least one waypoint (X, X1) from the path set comprises removing at least one waypoint (X, X1) which is unnecessary for providing for conflict-free traversal, wherein the traversal was conflict-free before removing the at least one waypoint (X, X1) from the path set and is still conflict-free after removing the at least one waypoint (X, X1) from the path set.

15. The method according to claim 14, further comprising:
receiving, by an autonomous robot (106) of the plurality of autonomous robots (106), the path set solution comprising one or more waypoints (X, X1) for at least one path, wherein a respective waypoint (X, X1) of the one or more waypoints (X, X1) is associated with a time budget;
determining, by the autonomous robot (106), a path from a current location of the autonomous robot (106) to the respective waypoint (X, X1); and
traversing, by the autonomous robot (106), the determined path in accordance with the time budget.

## Patentansprüche

1. Einrichtung (200), die Folgendes umfasst:
mindestens einen Prozessor (202); und
mindestens einen Speicher (204), der Anweisungen beinhaltet, wobei der mindestens eine Speicher (204) und die Anweisungen dazu ausgelegt sind, die Einrichtung (200) mit dem mindestens einen Prozessor (202) zu Folgendem zu veranlassen:
Erhalten eines Pfadsatzes, der eine Vielzahl von Pfaden umfasst, die von einer Vielzahl von autonomen Robotern (106) zu überfahren sind, wobei ein jeweiliger Pfad der Vielzahl von Pfaden eine Vielzahl von Wegpunkten (X X1) umfasst, die Orte definieren, den ein jeweiliger autonomer Roboter (106) während einer Überfahrt des jeweiligen Pfades überfahren soll; und
Bestimmen einer Pfadsatzlösung mindestens auf Basis des Pfadsatzes, wobei ein jeweiliger Wegpunkt (X, X1) der Pfadsatzlösung mit einem räumlichen Ort und einem Zeitbudget verknüpft ist, wobei das Zeitbudget eine Zeitmenge definiert, die einem jeweiligen autonomen Roboter (106) gewährt ist, um am jeweiligen Wegpunkt (X, X1) anzukommen, wobei die Pfadsatzlösung eine konfliktfreie Überfahrt der Vielzahl von Pfaden durch die Vielzahl von autonomen Robotern (106) bereitstellt, und wobei der mindestens eine Speicher (204) und die Anweisungen, die dazu ausgelegt sind, die Pfadsatzlösung zu bestimmen, ferner dazu ausgelegt sind, die Einrichtung (200) mit dem mindestens einen Prozessor (202) zu veranlassen, mindestens einen Wegpunkt (X, X1) aus dem Pfadsatz zu entfernen, während sichergestellt wird, dass die Pfadsatzlösung, aus der der mindestens eine Wegpunkt (X, X1) entfernt wurde, eine konfliktfreie Überfahrt bereitstellt,
**dadurch gekennzeichnet, dass** der mindestens eine Speicher (204) und die Anweisungen beim Entfernen von mindestens einem Wegpunkt (X, X1) aus dem Pfadsatz dazu ausgelegt sind, die Einrichtung (200) mit dem mindestens einen Prozessor (202) zu veranlassen, mindestens einen Wegpunkt (X, X1) zu entfernen, der zum Bereitstellen einer konfliktfreien Überfahrt unnötig ist, wobei die Überfahrt konfliktfrei war, bevor der mindestens eine Wegpunkt (X, X1) aus dem Pfadsatz entfernt wurde, und nach wie vor konfliktfrei ist, nachdem der mindestens eine Wegpunkt (X, X1) aus dem Pfadsatz entfernt wurde.

2. Einrichtung (200) nach Anspruch 1, wobei der mindestens eine Speicher (204) und die Anweisungen, die dazu ausgelegt sind, die Pfadsatzlösung zu bestimmen, ferner dazu ausgelegt sind, die Einrichtung (200) mit dem mindestens einen Prozessor (202) zu veranlassen, einen Wegpunktentfernungsprozess für einen jeweiligen Wegpunkt (X, X1) des Pfadsatzes durchzuführen, wobei der Wegpunktentfernungsprozess Folgendes umfasst:
Entfernen des jeweiligen Wegpunktes (X, X1) aus dem Pfadsatz, um einen revidierten Pfadsatz zu erzeugen;
Bestimmen, ob der revidierte Pfadsatz eine konfliktfreie Überfahrt der Vielzahl von Pfaden durch die Vielzahl von autonomen Robotern (106) bereitstellt; und
gemäß einer Bestimmung, dass der revidierte Pfadsatz keine konfliktfreie Überfahrt der Vielzahl von Pfaden durch die Vielzahl von autonomen Robotern (106) bereitstellt:
Einfügen des jeweiligen Wegpunktes (X, X1) in den revidierten Pfadsatz,
wobei das Bestimmen der Pfadsatzlösung ferner das Durchführen einer weiteren Iteration des Wegpunktentfernungsprozesses durch Entfernen eines weiteren Wegpunktes (X, X1), der sich vom jeweiligen Wegpunkt (X, X1) unterscheidet, und das Bestimmen, ob der Pfadsatz, aus dem ein weiterer Wegpunkt (X, X1) entfernt wurde, die konfliktfreie Überfahrt der Vielzahl von Pfaden durch die Vielzahl von autonomen Robotern (106) bereitstellt.

3. Einrichtung (200) nach Anspruch 2, wobei der mindestens eine Speicher (204) und die Anweisungen ferner dazu ausgelegt sind, die Einrichtung (200) mit dem mindestens einen Prozessor (202) zu Folgendem zu veranlassen:
gemäß einer Bestimmung, dass der revidierte Pfadsatz eine konfliktfreie Überfahrt der Vielzahl von Pfaden durch die Vielzahl von autonomen Robotern (106) bereitstellt:
Durchführen von mindestens einer zusätzlichen Iteration des Wegpunktentfernungsprozesses durch Entfernen von mindestens einem zusätzlichen Wegpunkt (X, X1) aus dem revidierten Pfadsatz.

4. Einrichtung (200) nach einem der Ansprüche 2 bis 3, wobei die Pfadsatzlösung in Reaktion darauf bestimmt wird, dass jeder Wegpunkt (X, X1) der Vielzahl von Wegpunkten (X, X1) unter Verwendung des Wegpunktentfernungsprozesses analysiert wird.

5. Einrichtung (200) nach einem der Ansprüche 2 bis 4, wobei das Bestimmen, ob der revidierte Pfadsatz eine konfliktfreie Überfahrt der Vielzahl von Pfaden durch die Vielzahl von autonomen Robotern (106) bereitstellt, auf einer Ausgabe eines booleschen Erfüllbarkeits(SAT)-Lösers nach dem Stand der Technik basiert.

6. Einrichtung nach Anspruch 5, wobei die Ausgabe auf Basis einer Eingabe einer Überfahrtformel des SAT-Lösers bestimmt wird, und der mindestens eine Speicher (204) und die Anweisungen ferner dazu ausgelegt sind, die Einrichtung (200) mit dem mindestens einen Prozessor (202) zu Folgendem zu veranlassen:
Bereitstellen der Überfahrtformel für den SAT-Löser, wobei die Überfahrtformel mindestens auf dem revidierten Pfadsatz basiert,
wobei die Überfahrtformel boolesche Repräsentationen von jeweiligen autonomen Robotern (106) der Vielzahl von autonomen Robotern (106), Positionen der jeweiligen autonomen Roboter (106) und Zeiten, die mit den Positionen der jeweiligen Roboter (106) verknüpft sind, umfasst.

7. Einrichtung nach einem der Ansprüche 1 bis 6, wobei der Pfadsatz eine konfliktfreie Überfahrt der Vielzahl von Pfaden durch die Vielzahl von autonomen Robotern (106) bereitstellt.

8. Einrichtung (200) nach einem der Ansprüche 1 bis 7, wobei das Sicherstellen, dass die Pfadsatzlösung, aus der der mindestens eine Wegpunkt entfernt wurde, eine konfliktfreie Überfahrt bereitstellt, das Sicherstellen, dass jede Route, die zwischen den jeweiligen Wegpunkten (X, X1) von einem jeweiligen autonomen Roboter (106) der Vielzahl von autonomen Robotern (106) gemäß dem Zeitbudget genommen wird, konfliktfrei ist.

9. Einrichtung (200) nach einem der Ansprüche 1 bis 8, wobei der mindestens eine Speicher (204) und die Anweisungen, die dazu ausgelegt sind, den Pfadsatz zu erhalten, ferner dazu ausgelegt sind, die Einrichtung (200) mit dem mindestens einen Prozessor (202) zu veranlassen, den Pfadsatz von mindestens einem autonomen Roboter (106) der Vielzahl von autonomen Robotern (106) zu empfangen.

10. Einrichtung (200) nach einem der Ansprüche 1 bis 9, wobei der mindestens eine Speicher (204) und die Anweisungen ferner dazu ausgelegt sind, die Einrichtung (200) mit dem mindestens einen Prozessor (202) zu Folgendem zu veranlassen:
Veranlassen einer Übertragung der Pfadsatzlösung zu mindestens einem autonomen Roboter (106) der Vielzahl von autonomen Robotern (106).

11. Einrichtung (200) nach einem der Ansprüche 1 bis 9, wobei die Einrichtung (200) durch einen autonomen Roboter (106) der Vielzahl von autonomen Robotern (106) verkörpert ist.

12. Einrichtung (200) nach Anspruch 11, wobei der mindestens eine Speicher (204) und die Anweisungen dazu ausgelegt sind, die Einrichtung (200) mit dem mindestens einen Prozessor (202) zu Folgendem zu veranlassen: Veranlassen einer Übertragung der Pfadsatzlösung zu mindestens einem weiteren autonomen Roboter (106) der Vielzahl von autonomen Robotern (106).

13. Computerprogrammprodukt, das ein computerlesbares Speichermedium (204) umfasst, in dem Anweisungen gespeichert sind, die, wenn sie von einer Einrichtung (200) ausgeführt werden, die Einrichtung (200) mindestens zu Folgendem veranlassen:
Erhalten eines Pfadsatzes, der eine Vielzahl von Pfaden umfasst, die von einer Vielzahl von autonomen Robotern (106) zu überfahren sind, wobei ein jeweiliger Pfad der Vielzahl von Pfaden eine Vielzahl von Wegpunkten (X X1) umfasst, die Orte definieren, den ein jeweiliger autonomer Roboter (106) während einer Überfahrt des jeweiligen Pfades überfahren soll; und
Bestimmen einer Pfadsatzlösung mindestens auf Basis des Pfadsatzes, wobei ein jeweiliger Wegpunkt (X, X1) der Pfadsatzlösung mit einem räumlichen Ort und einem Zeitbudget verknüpft ist, wobei das Zeitbudget eine Zeitmenge definiert, die einem jeweiligen autonomen Roboter (106) gewährt ist, um am jeweiligen Wegpunkt (X, X1) anzukommen, wobei die Pfadsatzlösung eine konfliktfreie Überfahrt der Vielzahl von Pfaden durch die Vielzahl von autonomen Robotern (106) bereitstellt, und wobei die Anweisungen, die dazu ausgelegt sind, die Pfadsatzlösung zu bestimmen, ferner dazu ausgelegt sind, die Einrichtung (200) zu veranlassen, mindestens einen Wegpunkt (X, X1) aus dem Pfadsatz zu entfernen, während sichergestellt wird, dass die Pfadsatzlösung, aus der der mindestens eine Wegpunkt (X, X1) entfernt wurde, eine konfliktfreie Überfahrt bereitstellt,
**dadurch gekennzeichnet, dass** die Anweisungen beim Entfernen von mindestens einem Wegpunkt (X, X1) aus dem Pfadsatz dazu ausgelegt sind, die Einrichtung (200) zu veranlassen, mindestens einen Wegpunkt (X, X1) zu entfernen, der zum Bereitstellen einer konfliktfreien Überfahrt unnötig ist, wobei die Überfahrt konfliktfrei war, bevor der mindestens eine Wegpunkt (X, X1) aus dem Pfadsatz entfernt wurde, und nach wie vor konfliktfrei ist, nachdem der mindestens eine Wegpunkt (X, X1) aus dem Pfadsatz entfernt wurde.

14. Verfahren, das Folgendes umfasst:
Erhalten eines Pfadsatzes, der eine Vielzahl von Pfaden umfasst, die von einer Vielzahl von autonomen Robotern (106) zu überfahren sind, wobei ein jeweiliger Pfad der Vielzahl von Pfaden eine Vielzahl von Wegpunkten (X X1) umfasst, die Orte definieren, die ein jeweiliger autonomer Roboter (106) während einer Überfahrt des jeweiligen Pfades überfahren soll; und
Bestimmen einer Pfadsatzlösung mindestens auf Basis des Pfadsatzes, wobei ein jeweiliger Wegpunkt (X, X1) der Pfadsatzlösung mit einem räumlichen Ort und einem Zeitbudget verknüpft ist, wobei das Zeitbudget eine Zeitmenge definiert, die einem jeweiligen autonomen Roboter (106) gewährt ist, um am jeweiligen Wegpunkt (X, X1) anzukommen, wobei die Pfadsatzlösung eine konfliktfreie Überfahrt der Vielzahl von Pfaden durch die Vielzahl von autonomen Robotern (106) bereitstellt, und wobei das Bestimmen der Pfadsatzlösung das Entfernen von mindestens einem Wegpunkt (X, X1) aus dem Pfadsatz umfasst, während sichergestellt wird, dass die Pfadsatzlösung, aus der der mindestens eine Wegpunkt (X, X1) entfernt wurde, eine konfliktfreie Überfahrt bereitstellt,
**dadurch gekennzeichnet, dass** das Entfernen von mindestens einem Wegpunkt (X, X1) aus dem Pfadsatz das Entfernen von mindestens einem Wegpunkt (X, X1) umfasst, der zum Bereitstellen einer konfliktfreien Überfahrt unnötig ist, wobei die Überfahrt konfliktfrei war, bevor der mindestens eine Wegpunkt (X, X1) aus dem Pfadsatz entfernt wurde, und nach wie vor konfliktfrei ist, nachdem der mindestens eine Wegpunkt (X, X1) aus dem Pfadsatz entfernt wurde.

15. Verfahren nach Anspruch 14, das ferner Folgendes umfasst:
Empfangen der Pfadsatzlösung, die einen oder mehrere Wegpunkte (X, X1) für mindestens einen Pfad umfasst, durch einen autonomen Roboter (106) der Vielzahl von autonomen Robotern (106), wobei ein jeweiliger Wegpunkt (X, X1) des einen oder der mehreren Wegpunkte (X, X1) mit einem Zeitbudget verknüpft ist;
Bestimmen eines Pfades von einem aktuellen Ort des autonomen Roboters (106) zum jeweiligen Wegpunkt (X, X1) durch den autonomen Roboter (106); und
Überfahren des bestimmten Pfades durch den autonomen Roboter (106) gemäß dem Zeitbudget.

## Revendications

1. Appareil (200) comprenant :
au moins un processeur (202) ; et
au moins une mémoire (204) comportant des instructions, l'au moins une mémoire (204) et les instructions étant configurées pour, avec l'au moins un processeur (202), amener l'appareil (200) à :
obtenir un ensemble de trajectoires comprenant une pluralité de trajectoires à traverser par une pluralité de robots autonomes (106), une trajectoire respective de la pluralité de trajectoires comprenant une pluralité de points de cheminement (X, X1) définissant des emplacements qu'un robot autonome (106) respectif doit traverser pendant la traversée de la trajectoire respective ; et
en se basant au moins sur l'ensemble de trajectoires, déterminer une solution d'ensemble de trajectoires, dans lequel un point de cheminement (X, X1) respectif de la solution d'ensemble de trajectoires est associé à un emplacement spatial et à un budget de temps, le budget de temps définissant une quantité de temps accordée à un robot autonome (106) respectif pour arriver au point de cheminement (X, X1) respectif, dans lequel la solution d'ensemble de trajectoires assure une traversée sans conflit de la pluralité de trajectoires par la pluralité de robots autonomes (106), et dans lequel l'au moins une mémoire (204) et les instructions configurées pour déterminer la solution d'ensemble de trajectoires sont en outre configurées pour, avec l'au moins un processeur (202), amener l'appareil (200) à retirer au moins un point de cheminement (X, X1) de l'ensemble de trajectoires tout en garantissant que la solution d'ensemble de trajectoires dont l'au moins un point de cheminement (X, X1) a été retiré assure une traversée sans conflit,
**caractérisé en ce que**, lors du retrait d'au moins un point de cheminement (X, X1) de l'ensemble de trajectoires, l'au moins une mémoire (204) et les instructions sont configurées pour, avec l'au moins un processeur (202), amener l'appareil (200) à retirer au moins un point de cheminement (X, X1) qui n'est pas nécessaire pour assurer une traversée sans conflit, dans lequel la traversée était sans conflit avant de retirer l'au moins un point de cheminement (X, X1) de l'ensemble de trajectoires et reste sans conflit après avoir retiré l'au moins un point de cheminement (X, X1) de l'ensemble de trajectoires.

2. Appareil (200) selon la revendication 1, dans lequel l'au moins une mémoire (204) et les instructions configurées pour déterminer la solution d'ensemble de trajectoires sont en outre configurées pour, avec l'au moins un processeur (202), amener l'appareil (200) à réaliser un processus de retrait de point de cheminement pour un point de cheminement (X, X1) respectif de l'ensemble de trajectoires, le processus de retrait de point de cheminement comprenant les étapes suivantes :
retirer le point de cheminement (X, X1) respectif de l'ensemble de trajectoires pour générer un ensemble de trajectoires révisé ;
déterminer si l'ensemble de trajectoires révisé assure une traversée sans conflit de la pluralité de trajectoires par la pluralité de robots autonomes (106) ; et
conformément à une détermination selon laquelle l'ensemble de trajectoires révisé n'assure pas une traversée sans conflit de la pluralité de trajectoires par la pluralité de robots autonomes (106) :
insérer le point de cheminement (X, X1) respectif dans l'ensemble de trajectoires révisé,
dans lequel la détermination de la solution d'ensemble de trajectoires comprend en outre la réalisation d'une autre itération du processus de retrait de point de cheminement en retirant de l'ensemble de trajectoires un autre point de cheminement (X, X1) différent du point de cheminement (X, X1) respectif et en déterminant si l'ensemble de trajectoires dont l'autre point de cheminement (X, X1) a été retiré assure une traversée sans conflit de la pluralité de trajectoires par la pluralité de robots autonomes (106).

3. Appareil (200) selon la revendication 2, dans lequel l'au moins une mémoire (204) et les instructions sont en outre configurées pour, avec l'au moins un processeur (202), amener l'appareil (200) à :
conformément à une détermination selon laquelle l'ensemble de trajectoires révisé assure une traversée sans conflit de la pluralité de trajectoires par la pluralité de robots autonomes (106) :
réaliser au moins une itération supplémentaire du processus de retrait de point de cheminement en retirant au moins un point de cheminement (X, X1) supplémentaire de l'ensemble de trajectoires révisé.

4. Appareil (200) selon l'une des revendications 2 et 3, dans lequel la solution d'ensemble de trajectoires est déterminée en réponse à l'analyse de chaque point de cheminement (X, X1) de la pluralité de points de cheminement (X, X1) à l'aide du processus de retrait de point de cheminement.

5. Appareil (200) selon l'une des revendications 2 à 4, dans lequel le fait de déterminer si l'ensemble de trajectoires révisé assure une traversée sans conflit de la pluralité de trajectoires par la pluralité de robots autonomes (106) est basé sur une sortie d'un solveur de satisfiabilité booléenne, SAT, de pointe.

6. Appareil selon la revendication 5, dans lequel la sortie est déterminée sur la base d'une entrée d'une formule de traversée dans le solveur SAT, et l'au moins une mémoire (204) et les instructions sont en outre configurées pour, avec l'au moins un processeur (202), amener l'appareil (200) à :
fournir la formule de traversée au solveur SAT, dans lequel la formule de traversée est basée au moins sur l'ensemble de trajectoires révisé,
dans lequel la formule de traversée comprend des représentations booléennes de robots autonomes (106) respectifs de la pluralité de robots autonomes (106), des positions des robots autonomes (106) respectifs, et des temps associés aux positions des robots (106) respectifs.

7. Appareil selon l'une des revendications 1 à 6, dans lequel l'ensemble de trajectoires assure une traversée sans conflit de la pluralité de trajectoires par la pluralité de robots autonomes (106).

8. Appareil (200) selon l'une des revendications 1 à 7, dans lequel le fait de s'assurer que la solution d'ensemble de trajectoires dont l'au moins un point de cheminement a été retiré assure une traversée sans conflit consiste à s'assurer que tout itinéraire emprunté entre des points de cheminement (X, X1) respectifs par un robot autonome (106) respectif de la pluralité de robots autonomes (106) conformément au budget de temps est sans conflit.

9. Appareil (200) selon l'une des revendications 1 à 8, dans lequel l'au moins une mémoire (204) et les instructions configurées pour obtenir l'ensemble de trajectoires sont en outre configurées pour, avec l'au moins un processeur (202), amener l'appareil (200) à recevoir d'au moins un robot autonome (106) de la pluralité de robots autonomes (106) l'ensemble de trajectoires.

10. Appareil (200) selon l'une des revendications 1 à 9, dans lequel l'au moins une mémoire (204) et les instructions sont en outre configurées pour, avec l'au moins un processeur (202), amener l'appareil (200) à :
provoquer la transmission de la solution d'ensemble de trajectoires à au moins un robot autonome (106) de la pluralité de robots autonomes (106).

11. Appareil (200) selon l'une des revendications 1 à 9, dans lequel l'appareil (200) est incarné par un robot autonome (106) de la pluralité de robots autonomes (106).

12. Appareil (200) selon la revendication 11, dans lequel l'au moins une mémoire (204) et les instructions sont configurées pour, avec l'au moins un processeur (202), amener l'appareil (200) à :
provoquer la transmission de la solution d'ensemble de trajectoires à au moins un autre robot autonome (106) de la pluralité de robots autonomes (106).

13. Produit de programme informatique comprenant un support de stockage lisible par ordinateur (204) stockant des instructions qui, lorsqu'elles sont exécutées par un appareil (200), amènent l'appareil (200) à au moins :
obtenir un ensemble de trajectoires comprenant une pluralité de trajectoires à traverser par une pluralité de robots autonomes (106), une trajectoire respective de la pluralité de trajectoires comprenant une pluralité de points de cheminement (X, X1) définissant des emplacements qu'un robot autonome (106) respectif doit traverser pendant la traversée de la trajectoire respective ; et
en se basant au moins sur l'ensemble de trajectoires, déterminer une solution d'ensemble de trajectoires, dans lequel un point de cheminement (X, X1) respectif de la solution d'ensemble de trajectoires est associé à un emplacement spatial et à un budget de temps, le budget de temps définissant une quantité de temps accordée à un robot autonome (106) respectif pour arriver au point de cheminement (X, X1) respectif, dans lequel la solution d'ensemble de trajectoires assure une traversée sans conflit de la pluralité de trajectoires par la pluralité de robots autonomes (106), et dans lequel les instructions configurées pour déterminer la solution d'ensemble de trajectoires sont en outre configurées pour amener l'appareil (200) à retirer au moins un point de cheminement (X, X1) de l'ensemble de trajectoires tout en garantissant que la solution d'ensemble de trajectoires dont l'au moins un point de cheminement (X, X1) a été retiré assure une traversée sans conflit,
**caractérisé en ce que**, lors du retrait d'au moins un point de cheminement (X, X1) de l'ensemble de trajectoires, les instructions sont configurées pour amener l'appareil (200) à retirer au moins un point de cheminement (X, X1) qui n'est pas nécessaire pour assurer une traversée sans conflit, dans lequel la traversée était dans conflit avant de retirer l'au moins un point de cheminement (X, X1) de l'ensemble de trajectoires et reste sans conflit après avoir retiré l'au moins un point de cheminement (X, X1) de l'ensemble de trajectoires.

14. Procédé comprenant les étapes suivantes :
obtenir un ensemble de trajectoires comprenant une pluralité de trajectoires à traverser par une pluralité de robots autonomes (106), une trajectoire respective de la pluralité de trajectoires comprenant une pluralité de points de cheminement (X, X1) définissant des emplacements qu'un robot autonome (106) respectif doit traverser pendant la traversée de la trajectoire respective ; et
en se basant au moins sur l'ensemble de trajectoires, déterminer une solution d'ensemble de trajectoires, dans lequel un point de cheminement (X, X1) respectif de la solution d'ensemble de trajectoires est associé à un emplacement spatial et à un budget de temps, le budget de temps définissant une quantité de temps accordée à un robot autonome (106) respectif pour arriver au point de cheminement (X, X1) respectif, dans lequel la solution d'ensemble de trajectoires assure une traversée sans conflit de la pluralité de trajectoires par la pluralité de robots autonomes (106), et dans lequel la détermination de la solution d'ensemble de trajectoires comprend le retrait d'au moins un point de cheminement (X, X1) de l'ensemble de trajectoires tout en garantissant que la solution d'ensemble de trajectoires dont l'au moins un point de cheminement (X, X1) a été retiré assure une traversée sans conflit,
**caractérisé en ce que** le retrait d'au moins un point de cheminement (X, X1) de l'ensemble de trajectoires comprend le retrait d'au moins un point de cheminement (X, X1) qui n'est pas nécessaire pour assurer une traversée sans conflit, dans lequel la traversée était sans conflit avant de retirer l'au moins un point de cheminement (X, X1) de l'ensemble de trajectoires et reste sans conflit après avoir retiré l'au moins un point de cheminement (X, X1) de l'ensemble de trajectoires.

15. Procédé selon la revendication 14, comprenant en outre les étapes suivantes :
recevoir, par un robot autonome (106) de la pluralité de robots autonomes (106), la solution d'ensemble de trajectoires comprenant un ou plusieurs points de cheminement (X, X1) pour au moins une trajectoire, dans lequel un point de cheminement (X, X1) respectif des un ou plusieurs points de cheminement (X, X1) est associé à un budget de temps ;
déterminer, par le robot autonome (106), une trajectoire d'un emplacement actuel du robot autonome (106) au point de cheminement (X, X1) respectif ; et
traverser, par le robot autonome (106), la trajectoire déterminée conformément au budget de temps.
